# EUROPEAN PATENT APPLICATION

(11) **EP 1 657 080 A1**
(43) Date of publication of application: **17.05.2006**
(21) Application number: 05110405.7
(22) Date of filing: 07.11.2005
(51) Int. Cl.: B60C 11/18

(54) **Motorcycle tire**

(30) Priority: 12.11.2004 US 987493
(71) Applicant: THE GOODYEAR TIRE & RUBBER COMPANY, Akron, Ohio 44316-0001 (US)
(72) Inventor: Ravasio, Loic, F-54150, Mairy (FR); Desarcon, Jean-Christophe, L-3323, Bivange (LU)
(74) Representative: Kutsch, Bernd

(57) **Abstract**

A tire is disclosed having a pair of beads (12), a carcass (20) extending between the beads, a tread (18) disposed outwardly of the carcass where the tread has tread edges (22). The tire further comprises a pair of sidewalls (14) extending from the tread edges (22) to the respective beads (12). The tread further includes a first rubber composition (28) having a first working temperature and a second rubber composition (30) having a second working temperature, wherein the first rubber composition reaches its working temperature faster than the second rubber composition reaches its working temperature.

## Description

### Field of Invention

This invention relates to a tire and particularly to a motorcycle tire.

### Description of the Related Art

Treads of rubber tires are often prepared of a cap base construction in which the outer portion of the tread is the cap and the underlying part of the tread between the tread cap and the supporting tire carcass, is its base. The cap portion is usually designed to be ground contacting and, thus, have associated properties. The base portion generally overlays the tire carcass and is usually designed to support the cap, therefore, not to be ground contacting. Such cap base constructions are well known to those skilled in the art.

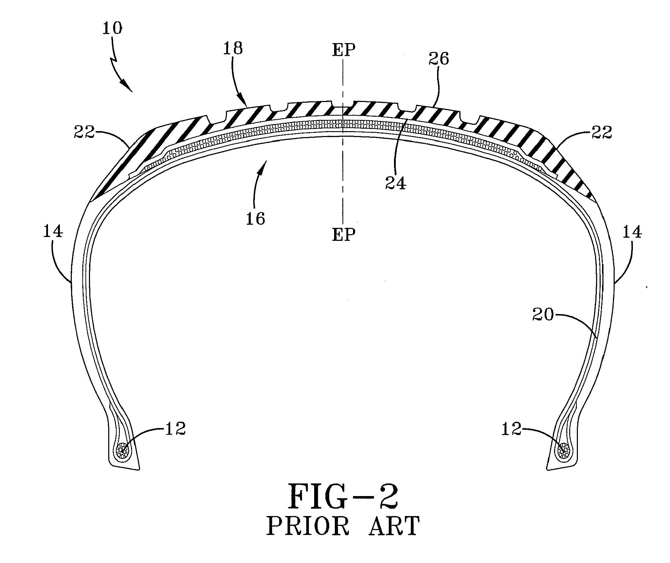

It is known in the art for tread of motorcycle tires to be made from the same rubber composition, namely, hard, medium, or soft rubber. Generally, a high performance tire utilizes soft rubber in the tread for a better grip or traction on the roadway or other underlying surface. Improved grip can be attributed to soft rubber reaching its "working temperature" more quickly than a medium or hard rubber. "Working temperature" means the temperature when the grip is optimum. While the grip of a high performance tire is high, the tire tread wears quickly. To the contrary, normal tires use a hard rubber and its wear is relatively slower than a soft rubber. Further, the grip for a normal tire is lower, and it takes longer for the hard rubber to reach its "working temperature." In the art of motorcycle tires, motorcycle tires are often worn on its top, as shown in FIGURE 2, whereas the sidewalls are almost new or at least less worn. This irregular wear could change the ride behavior of the motorcycle tire.

Based upon the foregoing, to avoid irregular wear in high performance tires, it is desirable to use a harder rubber in the tread region. However, uneven wear, or the use of a harder rubber during high speed drives, may have an effect on handling, especially during acceleration, braking, and steering around curves. Currently, riders choose between different types of tires according to his or her driving style, whether the driving style is long distance driving, leisurely drives where the driver steers around gentle curves in the roadway, or a sport style where the driver quickly accelerates and decelerates along the roadway. As such, there is a need in the art to provide a motorcycle tire that uses different rubbers in the tire tread so that one tire can accommodate different driving styles.

### Summary of the Invention

According to one aspect of the present invention, a tire, particularly a motorcycle tire, is provided which comprises a pair of beads, a carcass extending between the beads, a tread disposed outwardly of the carcass where the tread has tread edges. The tire further comprises a pair of sidewalls extending from the tread edges to the respective beads. The tread further includes a first rubber composition having a working temperature and a second rubber composition having a working temperature, wherein the first rubber composition reaches its working temperature faster than the second rubber composition reaches its working temperature. The first rubber composition and the second rubber composition are adapted to contact an associated underlying surface. The combination of the first rubber composition and the second rubber composition is intended to provide more even wear across the tire tread in order to increase the life of a tire and provide better tire performance.

It is yet another object of the present invention to provide a motorcycle tire where the pair of sidewalls may be comprised of the first rubber composition.

It is yet another object of the present invention wherein the tread may further comprise a tread base and a tread cap such that the first rubber composition and the second rubber composition extend from the tread base to the tread cap.

It is yet another object of the present invention to provide a tire wherein the tread may further comprise a third rubber composition having a working temperature, wherein the working temperature of the third rubber composition reaches its working temperature slower than the second rubber composition reaches its working temperature.

Still yet, another object of the present invention is to provide a motorcycle tire wherein the tire may have a first radius and a second radius, the first and second radii intersect the tread, and the second rubber composition may be juxtaposed to the first rubber composition and may be between the first and second radii.

Further, another object of the present invention is to provide a tire wherein the tire may have a first radius, a second radius, a third radius, and a fourth radius, each of the radii intersecting the tread, the tread may further comprise a third rubber composition, wherein the third rubber composition may be juxtaposed to the second rubber composition between the first radii and the second radii, the second rubber composition may be juxtaposed to the first rubber composition and the third rubber composition between the first and third radii, and the third rubber composition may also be juxtaposed to the first rubber composition and the third rubber composition between the second and fourth radii.

It is yet another object of the present invention to provide a motorcycle wherein the first rubber composition may be a soft rubber, the second rubber composition may be a medium rubber, and a third rubber composition may be a hard rubber.

Still yet, another object of the present invention is to provide a motorcycle tire wherein a portion of the first rubber composition may be juxtaposed between the second rubber composition such that the second rubber composition is segmented into two portions.

Still yet, another object of the present invention is to provide a motorcycle tire wherein the first rubber composition may have a cross sectional area C₁, each of the segmented portions of the second rubber composition may have a cross sectional area C₂, where C₁<C₂.

Still other benefits and advantages of the invention will become apparent to those skilled in the art to which it pertains upon a reading and understanding of the following detailed specification.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a cross sectional view of a motorcycle tire.
FIGURE 2 is a cross sectional view of a motorcycle tire having worn tire tread.
FIGURE 3 is a front perspective view of a motorcycle tire.
FIGURE 3A is an exploded view of FIGURE 3.
FIGURE 4 is a cross sectional view of the tread of the present invention.
FIGURE 5 is a cross sectional view of a second embodiment of the present invention.
FIGURE 6 is a cross sectional view of a third embodiment of the present invention.
FIGURE 7 is a cross sectional view of another embodiment of the present invention.

### Description of the Invention

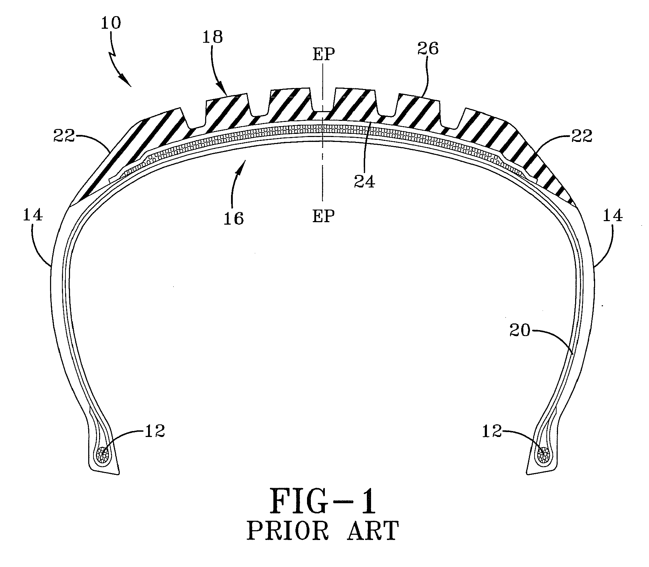

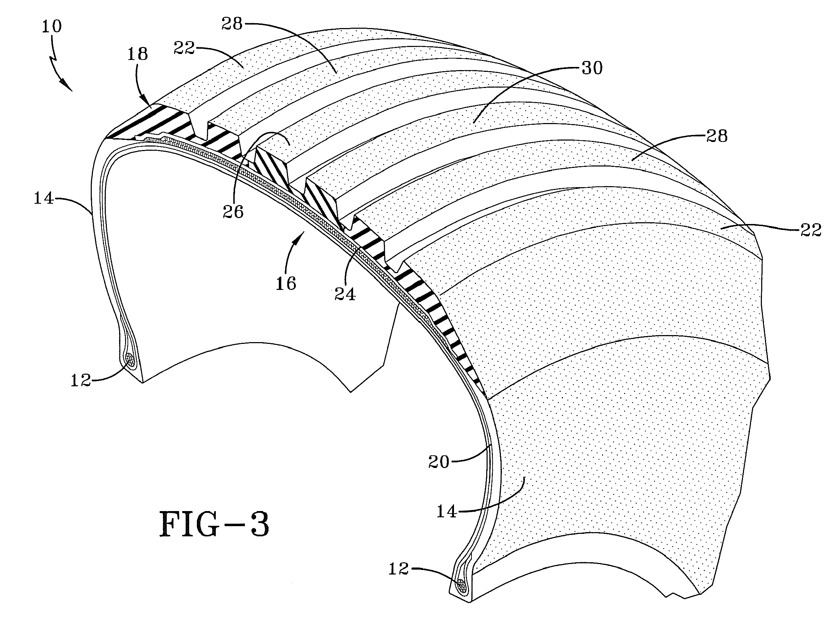

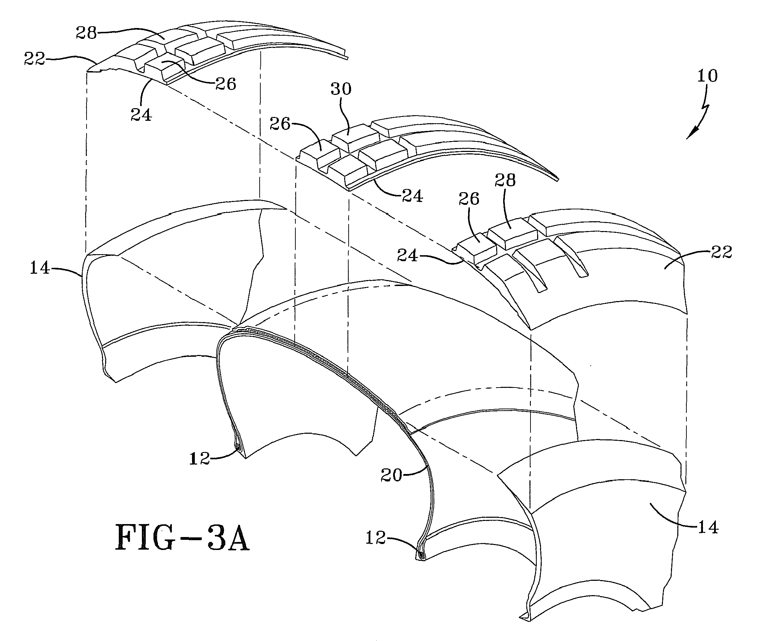

Referring now to the drawings wherein the showings are for purposes of illustrating a preferred embodiment of the invention. FIGURES 3-7 show the present invention. With reference to FIGURE 1, a motorcycle tire 10 as known in the art is shown. The tire 10 is a toroidal-shaped composite structure which is provided with a pair of circular substantially inextensible beads 12 for mounting of the tire on a rim. The tire 10 has an equatorial plane EP, which is the plane perpendicular to the tire's axis of rotation and passing through the center of its tread 18. A pair of sidewalls 14 extends from the beads 12 respectively to a crown portion 16, which extends circumferentially about the tire 10. Tread 18 for engaging the ground is provided on the outer periphery of the crown portion 16. A carcass of two or more plies 20 of elastomer-impregnated fabric extends between the beads 12 to provide reinforcement in the sidewalls 14 and crown portion 16 of the tire. These plies 20 may be comprised of a plurality of generally parallel reinforcing cords (not shown) which preferably extend at a cord angle not greater than about 75 degrees. The cords of one ply extending at the same angle but in an opposed direction to the cords of the other ply such that the cords of one ply cross the cords of the other ply in a manner commonly known to those of ordinary skill in the art to which this invention pertains. Cord angle means that angle at which cords of a ply or belt extend relative to and at the mid-circumferential plane of a tire. The tread 18 further comprises tread edges 22, which are the outermost points of a tire 10. The tread edges 22 touch the ground as the tire travels through its footprint while mounted on a vehicle under rated load and pressure. The carcass cords (not shown) may be made of any suitable material such as, by way of example only, nylon, rayon, polyester, fiberglass, aramid, or wire.

With reference now to FIGURES 3 and 3A, the tread 18 further includes a first rubber composition 28 having a working temperature and a second rubber composition 30 having a working temperature, wherein the first rubber composition 28 reaches its working temperature faster than said second rubber composition 30 reaches its working temperature. As shown in FIGURES 3 and 3A, the pair of sidewalls 14 may be comprised of the first rubber composition 28. Because of the different characteristics of the first and second rubber compositions 28, 30, the second rubber composition 30 provides better wear, while the first rubber composition 28 provides increased grip or traction on an underlying surface. The two compositions used together provide increased tire performance and simultaneously increases tire life since wear on the tread 18 will be more even.

With continuing reference to FIGURES 3 and 3A, the tread 18 comprises a tread base 24 and a tread cap 26. The first rubber composition 28 and the second rubber composition 30 extend from the tread base 24 to the tread cap 26.

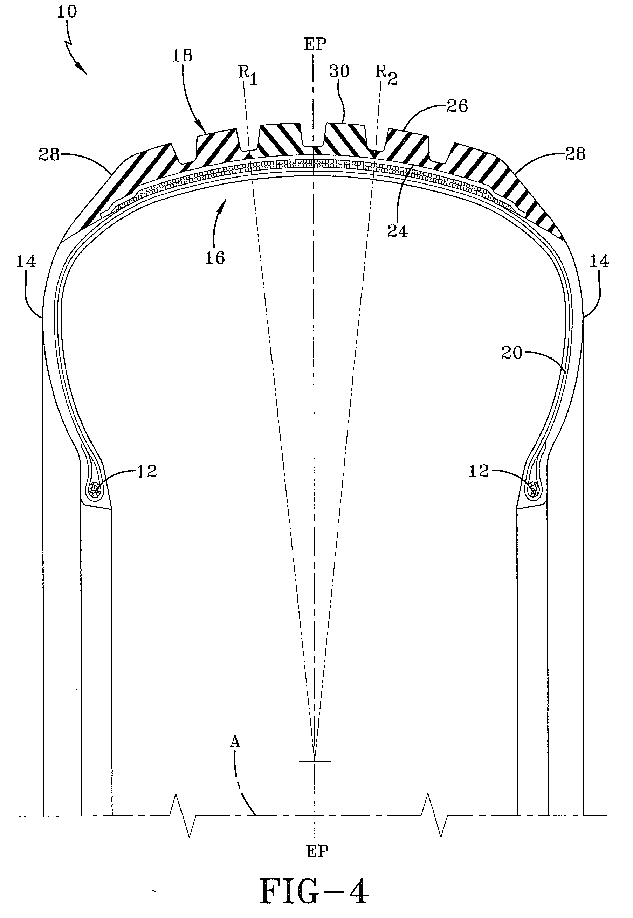

With reference now to FIGURE 4, the tire 10 has a first radius R₁ and a second radius R₂ extending from an axis of rotation A of the tire 10. With respect to the radii discussed herein, any reference point chosen with sound engineering judgment may be used to define the radii. The first and second radii R₁, R₂ intersect the tread 18. As shown in FIGURE 4, the second rubber composition 30 may be juxtaposed to the first rubber composition 28 and may be located between the first and second radii R₁, R₂.

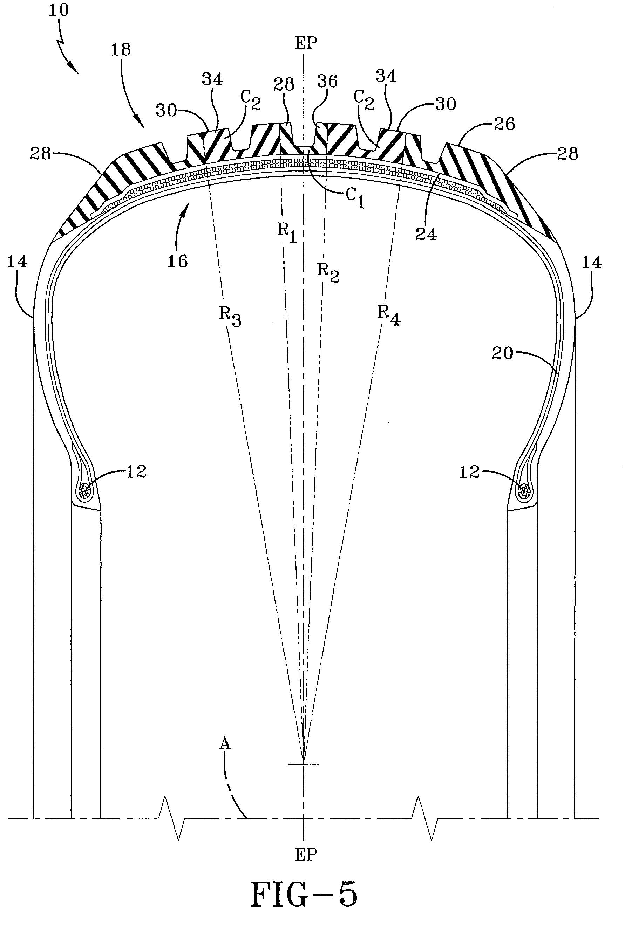

FIGURE 5 shows another embodiment of the present invention. In FIGURE 5, a portion 36 of the first rubber composition 28 may be juxtaposed between the second rubber composition 30 such that the second rubber composition 30 is segmented into two portions 34. As shown, the first rubber composition 28 has a cross sectional area C₁. Each of the segmented portions 34 of the second rubber composition 30 has a cross sectional area C₂, wherein C₁<C₂. It is also contemplated to be within the scope of the invention that C₁>C₂. Again, because of the positioning of the first and second rubber compositions 28, 30, the tire 10 provides increased performance and has more even wear due to the first rubber composition 28 and the second rubber composition 30 being in contact with the underlying surface.

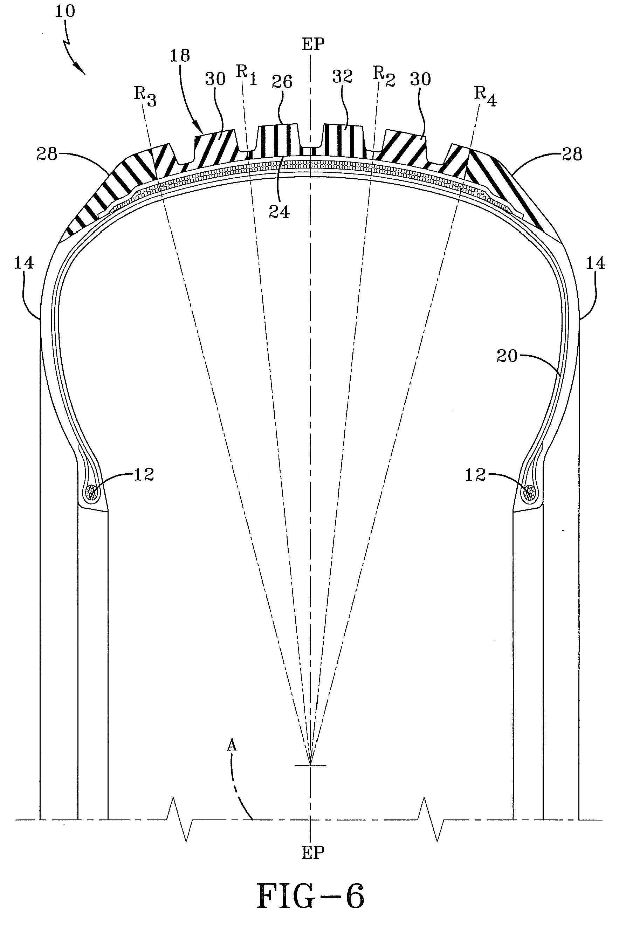

With reference to FIGURE 6, yet another embodiment of the present invention is shown. In this embodiment, a third rubber composition 32 may be introduced to the tire tread 18. The third composition 32 also has a working temperature, and it reaches its working temperature slower than the second rubber composition 30 reaches its working temperature. As shown in FIGURE 6, the tire 10 has a first radius R₁, a second radius R₂, a third radius R₃, and a fourth radius R₄. Each of the radii, R₁, R₂, R₃, R₄ may extend from the axis of rotation A and intersect the tread 18. The third rubber composition 32 may be juxtaposed to the second rubber composition 30 between the first radius R₁ and the second radius R₂. The second rubber composition 30 may be juxtaposed to the first rubber composition 28 and the third rubber composition 32 between the first and third radii. The third rubber composition 32 may also be juxtaposed to the first rubber composition 28 and the third rubber composition 32 between the second and fourth radii.

As can be seen from the FIGURES, any combination of the first, second, and third rubber compositions 28, 30, 32 may be utilized in the tread 18 that is chosen with sound engineering judgment. The positioning of the first, second, and third rubber compositions 28, 30, 32 may be symmetrical about the equatorial plane EP. The present invention enables the tire tread 18 to wear more evenly than tires known in the art and simultaneously does not compromise tire performance. With respect to the first, second, and third rubber compositions 28, 30, 32, the first rubber composition 28 may be a soft rubber. The second and third rubber compositions 30, 32 may generally be a medium and hard rubber, respectively. Further, the first rubber composition 28, the second rubber composition 30, and the third rubber composition 32 should be consistent or continuous, meaning that the rubber composition is basically the same rubber composition throughout the designated rubber components.

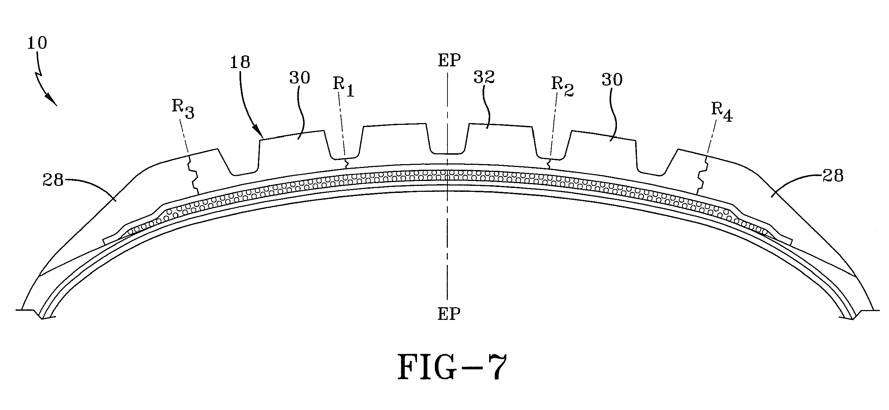

The tire 10 described herein is adapted to be used on motorcycles. Further, it can be manufactured with a multi-plex extruder, so that all of the tread components, namely the tread base 24 and tread cap 26, are in general practice extruded together in a multi-plex extruder to form a tread strip construction. Multi-plex extruders are known in the art and will not be further described herein. In an alternative embodiment, the different rubber compositions may interlock as shown in FIGURE 7.

The inventive tire 10 may also be described as polyvalent, meaning it has more than one valence, which is the quality that determines the number of atoms or groups with which any single atom or group will unite chemically. The first rubber composition 28 may have a first valence, and the second rubber composition 30 may have a second valence. The third rubber composition 32 may have a third valence.

## Claims

1. A tire comprising: a pair of beads (12), a carcass (20) extending between the beads, a tread (18) having tread edges (22) disposed outwardly of the carcass (20), and a pair of sidewalls (14) extending from the tread edges (22) to the respective beads (12), wherein the tread (18) has a first rubber composition (28) having a working temperature; and a second rubber composition (30) having a working temperature, and wherein the first rubber composition (28) reaches its working temperature faster than the second rubber composition (30) reaches its working temperature.

2. The tire of claim 1, wherein the tread (18) further comprises a third rubber composition (32) having a working temperature, wherein the third rubber composition (32) reaches its working temperature slower than the second rubber composition (30) reaches its working temperature.

3. The tire of claim 1 or 2, wherein the tire (10) has first and said second radii (R₁, R₂) intersecting the tread (18); and wherein the second rubber composition (30) is juxtaposed to the first rubber composition (28) and is positioned between the first and said second radii (R₁, R₂).

4. The tire of claim 3, wherein a portion of the first rubber composition (28) is juxtaposed between the second rubber composition (30) such that the second rubber composition (30) is segmented into two portions; wherein the first rubber composition (28) has a cross sectional area C₁; and wherein each of the segmented portions (34) of the second rubber composition (30) has a cross sectional area C₂, where C₁<C₂.

5. The tire of at least one of the previous claims wherein a portion of the first rubber composition (28) and a portion of the second rubber composition (30) are adapted to contact an associated underlying surface; and wherein the combination of the first rubber composition (28) and the second rubber composition (30) is adapted to provide even wear across the tread (18).

6. The tire of at least one of the previous claims, wherein the first rubber composition (28) is a soft rubber and the second rubber composition (30) is a hard rubber.

7. The tire of at least one of the previous claims, wherein the tread (18) further comprises a tread base (24) and a tread cap (26), the first rubber composition (28) and the second rubber composition (30) extending from the tread base (24) to the tread cap (26).

8. The tire of at least one of the previous claims, wherein the tire (10) has a first radius (R₁), a second radius (R₂), a third radius (R₃) and a fourth radius (R₄) wherein each of the radii (R₁, R₂, R₃, R₄) intersect the tread (18); wherein the tread (18) further comprises a third rubber composition (32), wherein the third rubber composition (32) is juxtaposed to the second rubber composition (30) between the first and second radii (R₁, R₂); wherein the second rubber composition (30) is juxtaposed to the first rubber composition (28) and the third rubber composition (32) between the first and third radii (R₁, R₃); and wherein the third rubber composition (32) is juxtaposed to the first rubber composition (28) and the third rubber composition (32) between the second and fourth radii (R₂, R₄).

9. The tire of at least one of the previous claims, wherein the pair of sidewalls (14) comprises the first rubber composition (28).

10. The tire of at least one of the previous claims, wherein the tire (10) is a motorcycle tire.
